# EUROPÄISCHE PATENTSCHRIFT

(11) **EP 1 305 262 B1**
(45) Veröffentlichungstag und Bekanntmachung des Hinweises auf die Patenterteilung: **13.10.2004**
(21) Anmeldenummer: 01974100.8
(22) Anmeldetag: 02.08.2001
(51) Int. Cl.: C03C 1/00, C03C 25/40, E04B 1/72, C03C 25/42, C08G 83/00

(54) **VERFAHREN ZUR HERSTELLUNG EINES VERBUNDWERKSTOFFES**
METHOD FOR PRODUCING A COMPOSITE
PROCEDE DE FABRICATION D'UN MATERIAU COMPOSITE

(30) Priorität: 02.08.2000 DE 10037723
(43) Veröffentlichungstag der Anmeldung: 02.05.2003
(73) Patentinhaber: URSA International GmbH, 63263 Neu-Isenburg (DE)
(72) Erfinder: RUPP, Roman, 91161 Hilpolstein (DE)
(74) Vertreter: Säger, Manfred, Dipl.-Ing.
(86) Internationale Anmeldenummer: PCT/EP2001/008968
(87) Internationale Veröffentlichungsnummer: WO 2002/010082

(56) Entgegenhaltungen:
- WO-A-98/21266
- US-A- 3 654 058

## Beschreibung

Die vorliegende Erfindung betrifft ein Verfahren zur Herstellung eines Verbundwerkstoffs gemäß dem Oberbegriff des Hauptanspruchs sowie Verbundwerkstoffe aus anorganischen Stoffen und Bindemitteln auf Silanbasis, hergestellt nach dem Verfahren.

Siliciumverbindungen in Form von Kieselsäureestern werden beispielsweise als Bindemittel für keramische Formstoffe für den Fein- oder Genauguß eingesetzt. Dabei ist es erforderlich, größere Mengen der Siliciumverbindungen einzusetzen, um ein vollständiges Abbinden des eingesetzten Formsandes zu erreichen, damit genau reproduzierbare Gußformen erhalten werden.

Silane, wie beispielsweise Methyltriethoxysilan (MTEOS) oder Tetraethoxysilan (TEOS) sind in Verbindung mit kolloidalen organischen Partikeln (DE-196 47 369 A1) auch bereits in Form eines Nanokomposits zum Binden von Verbundwerkstoffen auf der Basis von Glasfasern, Mineralfasern oder Holzwerkstoffen bekannt. Da bereits dünne Silanbeschichtungen zur Rissbildung neigen, hat man bisher den Zusatz von kolloidalen anorganischen Partikeln für erforderlich gehalten.

Aufgabe der vorliegenden Erfindung ist die Schaffung eines Verfahrens zur Herstellung eines Verbundwerkstoffes aus anorganischen Stoffen und Bindemitteln auf Silanbasis, mit dem sowohl Verbundwerkstoffe für die Bautechnik als auch hochfeste Werkstoffe beispielsweise für die Automobilindustrie, insbesondere die Innenverkleidung von Automobilen, hergestellt werden können. Als Bindemittel für die erfindungsgemäß hergestellten Verbundwerkstoffe werden Silane der allgemeinen Formel Rₙ-Si-X_{4-N} verwendet, worin R gleiche oder verschiedene Reste sind, die hydrolytisch nicht abspaltbar sind, und worin X ein oder mehrere Hydroxylreste oder eine oder mehrere hydrolytisch abspaltbare Reste darstellen die gleich oder verschieden sein können, und n eine Zahl zwischen 0 und 3 darstellt.

Als Reste R, die hydrolytisch nicht abspaltbar sind, werden Alkylreste, vorzugsweise Alkylreste mit eins bis vier Kohlenstoffatomen, vorzugsweise Methyl-, Ethyl-, Propyl-, i-Propyl-, Butyl- und i-Butylreste, Alkenylreste, vorzugsweise solche mit zwei bis vier Kohlenstoffatomen, wie Vinylreste, 1-Propenylreste, 2-Propenylreste oder Butenylreste, Alkinylreste, vorzugsweise Alkinylreste mit zwei bis vier Kohlenstoffatomen, wie zum Beispiel Acetylenyl oder Propargylreste, Arylreste, vorzugsweise mit 6 bis 10 Kohlenstoffatomen, wie beispielsweise Phenylreste oder Naphthylreste oder gemischte Reste aus den genannten Alkyl- bzw. Arylresten eingesetzt. Auch zyklische Reste, wie Cyclopropylreste, Cyclopentylreste oder Cyclohexylreste, können eingesetzt werden. Alle diesen genannten Gruppen können als zusätzliche Substituenten auch Halogenreste, Hydroxyreste, Alkoxyreste, Aminoreste oder Epoxidgruppenreste enthalten.

Besonders bevorzugt werden Silane eingesetzt, die niedere Alkylgruppen mit eins bis vier Kohlenstoffatomen enthalten, insbesondere Methylgruppen oder Ethylgruppen oder Phenylreste mit sechs bis zehn Kohlenstoffatomen, die gegebenenfalls auch substituiert sein können. In den Siliciumverbindungen der allgemeinen Formel ist der Wert für n bevorzugt 0, 1 oder 2 und besonders bevorzugt 0 oder 1. Besonders gute Ergebnisse werden erhalten, wenn mindestens 60 und insbesondere mindestens 70 Stoffmengenprozent der Siliciumverbindung der Formel den Wert n = 1 aufweisen, insbesondere wenn mehr als 80 oder vor allem mehr als 90 Stoffmengenprozent der Silane den Wert n = 1 aufweisen, wobei auch ein Einsatz von 100 % solcher Silane möglich ist.

Ganz besonders bevorzugt sind Verfahren, in denen die eingesetzten Silane entweder Methyltriethoxysilan (MTEOS) oder Tetraethoxysilan (TEOS) sind.

Als Reste X kommen insbesondere Hydroxylreste oder hydrolytisch abspaltbare Reste in Frage, wie beispielsweise Wasserstoff, Alkoxyreste, vorzugsweise Alkoxyreste mit zwei bis vier Kohlenstoffatomen, wie Ethoxyreste, n-Propoxyreste, i-Propoxyreste oder Butoxyreste, Aryloxyreste, insbesondere solche mit sechs bis zehn Kohlenstoffatomen, wie beispielsweise Phenoxyreste, Alkaryloxyreste, beispielsweise Benzyloxyreste, Azyloxyreste, vorzugsweise solche mit eins bis vier Kohlenstoffatomen, wie Acetoxyreste oder Propionylreste, Alkylcarbonylreste, wie z.B. Acetylreste oder Halogenreste, wie Fluorreste, Chlorreste, Bromreste oder Jodreste, insbesondere Chlorreste oder Bromreste in Betracht. Weitere Reste X sind Aminoreste die unsubstituiert oder substituiert sein können, beispielsweise durch Monooder Dialkylgruppen, Arylgruppen oder Aralkylgruppen, Amidreste, beispielsweise der Benzamidorest und Aldoxym- oder Ketoximreste. Die Reste X können auch unter sich verbunden sein durch Brückenatome wie dies zum Beispiel bei Silicium-Polyolkomplexen, die sich von Glykol, Glycerin oder Brenzkatechin ableiten, der Fall sein kann.

Besonders bevorzugt sind als Reste X Alkoxygruppen mit zwei bis vier Kohlenstoffatomen, insbesondere Ethoxygruppen. Auch Methoxyreste sind verwendbar. Sie weisen aber eine hohe Reaktivität auf, so daß bei der Synthese des Bindemittels sehr stark gekühlt werden muß, um die Exothermik der Reaktion zu beherrschen. Des weiteren weisen solche Bindemittelsysteme eine kürzere Lagerzeit und eine kurze Verarbeitungszeit auf. Bei der Verarbeitung müssen die strengen Grenzwerte für Methanol eingehalten werden.

Spezielle Beispiele für Silicium-Verbindungen der allgemeinen Formel sind folgende:
Si(OC₂H₅)₄, Si(O- n- oder i-C₃H₇)₄-Si(OC₄H₉)₄, SiCl₄,
Si(OOCCH₃)₄, CH₃-SiCl₃, CH₃-Si(OC₂H₅)₃, C₂H₅-SiCl₃,
C₂H₅-Si(OC₂H₅)₃, C₃H₇-Si(OC₂H₅)₃, C₆H₅-Si(OC₂H₅)₃,
(C₂H₅O)₃-Si-C₃H₆-Cl, (CH₃)₂SiCl₂, (CH₃)₂Si(OC₂H₅)₂,
(CH₃)₂Si(OH)₂, (C₆H₅)₂SiCl₂, (C₆H₅)₂Si(OC₂H₅)₂,
(i-C₃H₇)₃SiOH, CH₂=CH-Si(OOCCH₃)₃, CH₂=CH-SiCl₃,
CH₂=CH-Si(OC₂H₅)₃, HSiCl₃, CH₂=CH-Si(OC₂H₄OCH₃)₃,
CH₂=CH-CH₂-Si(OC₂H₅)₃, CH₂=CH-CH₂-Si(OOCCH₃)₃,
CH₂=C(CH₃)COO-C₃H₇-Si-(OC₂H₅)₃,
CH₂=C(CH₃)-COO-C₃H₇-Si(OC₂H₅)₃,
n-C₆H₁₃-CH₂-CH₂-Si(OC₂H₅)₃,
n-C₈H₁₇-CH₂-CH₂-Si(OC₂H₅)₃,
(C₂H₅O)₃Si-(CH₂)₃-O-CH₂

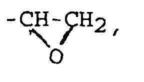

Die im erfindungsgemäßen Verfahren eingesetzten Bindemittel auf Silanbasis werden - im allgemeinen - in Form von Vorkondensaten eingesetzt, die durch Umsatz der Silane mit unterstöchiometrischen Mengen an Wasser, insbesondere mit weniger als 3 Mol, bevorzugt 1 bis 2 Mol Wasser pro Mol Siliciumverbindung, in Gegenwart von basischen oder sauren Katalysatoren erhalten werden können. Dabei bilden sich durch teilweise Hydrolyse der Silane im Reaktionsmedium im allgemeinen lösliche Oligomere, die einen Kondensationsgrad von beispielsweise etwa 2 bis 100, vorzugsweise etwa 2 bis 6 aufweisen können. Die zur Vorkondensation der Silane eingesetzte Wassermenge liegt vorzugsweise im Bereich von 0,1 bis 0,9, insbesondere im Bereich von 0,2 bis 0,8 und besonders bevorzugt im Bereich von 0,35 bis 0,45 Mol Wasser pro Mol der hydrolytisch abspaltbaren Reste X.

Die im erfindungsgemäßen Verfahren eingesetzten Siliciumverbindungen können auf die Glas- oder Mineralfasern durch folgende Verfahren aufgebracht werden: Sprühen, Fluten, Tauchen, Gießen.

Insbesondere werden die Siliciumverbindungen durch Sprühverfahren auf die Fasern aufgebracht, die wie folgt durchgeführt werden können:

Die Mineralfasern werden unmittelbar nach der Erzeugung durch einen Sprühring geführt, der mehrere Sprühdüsen enthält. Die Siliciumverbindungen werden mit Hilfe von Pumpen zu diesem Sprühring transportiert und das Material über die Düsen auf die Fasern verteilt, so daß man eine gleichmäßige Besprühung erreicht.

Die Vorkondensation der Siliciumverbindungen wird im allgemeinen bei Temperaturen im Bereich von 15° bis 80°C durchgeführt, vorzugsweise in folgenden Bereichen: 20 bis 75°C, und besonders bevorzugt 25 bis 45°C.

Dabei können reaktionsfähige Verbindungen, wie beispielsweise

Si(OC₂H₅)₄, H₃C-Si(OC₂H₅)₃ , H₅C₂-Si(OC₂H₅)₃

bei Zimmertemperatur umgesetzt werden, während reaktionsträgere Verbindungen, wie beispielsweise

n-C₆H₁₃-CH₂-CH₂-Si(OC₂H₅)₃

oder

n-C₈H₁₇-CH₂-CH₂-Si(OC₂H₅)₃

bei erhöhten Temperaturen im Bereich von 35 bis 80°C umgesetzt werden können.

Die nach dem erfindungsgemäßen Verfahren behandelten Fasern, Fasernstränge bzw. -bündel von Glas- und/oder Mineralfasern können auf verschiedene Weise in die endgültige Form gebracht und zu Formkörpern verformt oder verpreßt werden. Dies geschieht im allgemeinen auf folgende Weise:

Die Fasern werden mittels sogenannter Blas- oder Zischverfahren oder Kombinationen aus beiden Verfahren erzeugt und unmittelbar nach der Erzeugung mit dem Bindemittel besprüht. Die besprühten Fasern werden auf einem Lochblech abgelegt und mit Hilfe des Bleches in einen Härteofen überführt. Das Fasergelege wird in dem Härteofen mit Hilfe eines gelochten Oberund Unterbandes auf die gewünschte Dicke komprimiert und das Bindemittel ausgehärtet.

Bei der Herstellung von Verbundwerkstoffen, die beispielsweise in der Bau- bzw. Isoliertechnik eingesetzt werden sollen, sind die Verformungs- bzw. Pressdrucke relativ niedrig. Bei der Herstellung von Formkörpern, die beispielsweise als Teile für Automobilinneneinrichtungen oder dergleichen eingesetzt werden sollen, können andererseits sehr hohe Preßdrucke bis zu 30 bar eingesetzt werden. Die Erfindung wird nachfolgend durch Beispiele näher erläutert.

### Beispiel 1:

1 kg MTEOS wurden bei Raumtemperatur in einem Erlenmeyerkolben vorgelegt. Dazu wurden 120 g Wasser gegeben. Das Gemisch ist zunächst zweiphasig, die untere Phase bildet das Wasser, darüber ist das Alkoxysilan (hier MTEOS). An der Grenzfläche beginnt jedoch schon die Reaktion der Hydrolyse und Kondensation. Daher ist es wichtig so schnell wie möglich den Katalysator, d. h. die Säure zuzugeben. 14 g konzentrierte Schwefelsäure (Konzentration 37 Masse-%) wird in einem Schuß zugegeben und direkt danach oder schon bei der Zugabe so stark wie möglich mit einem Propellerrührer oder einem Stator-Rotor-Mischer gerührt. Es wird ca. 5 Minuten gerührt und dann in ein verschließbares Kunststoffgefäß abgefüllt. Der Binder wird 2 Tage bei Raumtemperatur gelagert.

Danach wird das Gemisch mit 15 g (ROR = 0,45) oder 30,5 g (ROR = 0,5) Wasser aktiviert, indem das Wasser bei ständigem Rühren in kleinen Portionen zugeführt wird. Das Gemisch wird ca. 10 min intensiv gerührt.

Danach ist das Gemisch verarbeitsfähig (klebrig) und kann zum Verkleben der Glaswolle eingesetzt werden. Zum Verkleben der Glaswolle werden 500 g des aktivierten Gemisches mit einer Sprühpistole auf 2 kg Glaswolle, die in einer Mischtrommel ständig vermischt werden, aufgesprüht.

Die besprühte Glaswolle wird aus der Trommel entnommen zwischen 2 Lochblechen (30 cm x 30 cm, 1 kg Last) zusammengedrückt und in einem Umlufttrockenschrank bei 250°C 3 min getrocknet. Nach 3 min kann man die verklebte Glaswolle (gebundene Glaswolle) zwischen den Lochblechen herausholen. Dadurch erhält man einen zusammenhängenden Glaswolledämmstoff.

### Beispiel 2:

1 kg MTEOS wird mit 182 g H₂O und 14 g konzentrierter Schwefelsäure (Konzentration 37 Masse-%) umgesetzt.

Die Schwefelsäure wird in einem Schuß zugegeben und direkt danach oder schon bei der Zugabe so stark wie möglich gerührt. Bem. Bei dieser Synthese wird mehr Wasser verwendet und es werden geringere oder keine Mengen an Wasser zur Aktivierung eingesetzt. Das Gemisch ist nicht so lange lagerstabil. Das Gemisch kann unaktiviert direkt 1 h nach der Synthese eingesetzt werden. Wird wird 1 kg Glaswolle mit 500 g Binder wie im Beispiel 1 besprüht.

### Beispiel 3:

1 kg MTEOS wurden bei Raumtemperatur in einem Erlenmeyerkolben vorgelegt. Dazu wurden 242 g Wasser gegeben. Das Gemisch ist zunächst zweiphasig, die untere Phase bildet das Wasser darüber ist das Alkoxysilan (hier MTEOS). An der Grenzfläche beginnt jedoch schon die Reaktion der Hydrolyse und Kondensation. 14 g konzentrierte Schwefelsäure (Konzentration 37 Masse-%) wird in einem Schuß zugegeben und schon bei der Zugabe so stark wie möglich mit einem Propellerrührer oder einem Stator-Rotor-Mischer gerührt.

Es wird ca. 5 min gerührt und danach auf Raumtemperatur abkühlen gelassen. Vor der Versprühung wird das Gemisch nicht aktiviert.

Man besprüht wie im Beispiel 1 2 kg Glas mit 500 g Binder.

### Beispiel 4:

1 kg MTEOS und 130 g Tetraethoxysilan (TEOS) werden bei Raumtemperatur vorgelegt und vermischt. Zu diesem Gemisch wurden auf einen Schlag 138 g Wasser zugegeben. Das Gemisch ist zunächst zweiphasig, die untere Phase bildet das Wasser, darüber ist das Alkoxysilangemisch (hier MTEOS/TEOS-Gemisch). Zu diesem Gemisch werden 16,6 g Schwefelsäure zugegeben und direkt danach so stark wie möglich gerührt. Es wird ca. 5 min gerührt und dann in einen Kunststoffbehälter abgefüllt. Das Gemisch wird 2 Tage zur Reifung gelagert.

Nach den 2 Tagen wird das Gemisch vor der Versprühung zum Verkleben der Glaswolle mit 35 g (ROR = 0,5) Wasser aktiviert, indem das Wasser bei ständigem Rühren in kleinen Portionen zugeführt wird. Das Gemisch wird ca. 10 min ständig gerührt.

### Falls (a)

Danach ist das Gemisch verarbeitungsfähig und kann in eine Sprühpistole abgefüllt werden. Es werden 2 kg Glasfaser in einer Mischtrommel vorgelegt und der Binder unter ständigem Mischen in die Trommel gesprüht, um den Binder gleichmäßig auf den Fasern zu verteilen. Danach wird die besprühte Faser zwischen zwei Lochbleche gelegt und mit einem Gewicht von 1 kg belastet.

Die besprühte Glaswolle zwischen den Lochblechen wird 3 min im Umlufttrockenschrank getrocknet. Mit dieser Verfahrensweisung erhält man einen zusammenhängenden Glaswolledämmstoff, der aus den zusammengepreßten Blechen genommen werden kann.

### Fall b)

1 kg des aktivierten Binders kann kurz vor dem Versprühen mit Hilfe eines Stator-Rotor-Mischers mit 3 kg Wasser aktiviert werden, wenn das Material direkt danach auf die Glaswolle gesprüht wird.

Versprüht man direkt nach dem Mischvorgang 800 g dieses Wasser-Binder-Gemisches auf 2 kg Glaswolle, so erhält man nach 3 min Zwangsdurchlüftung zwischen den Lochblechen in einem Umluftrockenschrank einen zusammenhängenden Glaswolledämmstoff.

## Patentansprüche

1. Verfahren zur Herstellung eines Verbundwerkstoffs aus anorganischen Stoffen und Bindemitteln auf Silanbasis, wobei als Bindemittel eine oder mehrere Siliciumverbindungen der allgemeinen Formel
Rₙ-Si-X₄-n
worin R gleiche verschiedene Reste sind, die hydrolytisch nicht abspaltbar sind, und worin X ein oder mehrere Hydroxyxlreste oder eine oder mehrere hydrolytisch abspaltbare Reste darstellen, die gleich oder verschieden sein können, und n eine Zahl zwischen 0 und 3 darstellt, bevorzugt 1 bis 2,
eingesetzt werden, welche Siliziumverbindungen mit unterstöcchiometrischen Mengen Wasser pro Mol Siliciumverbindung in Gegenwart von basischen oder sauren Katalysatoren vorkondensiert worden sind,
und wobei als anorganische Stoffe Bündel bzw. Stränge von Glas- und/oder Mineralfasern eingesetzt werden,
**dadurch gekennzeichnet, daß** die vorkondensierten Siliciumverbindungen in Mengen von 1 bis 20 Gewichts-% mit überstöcchiometrischen Mengen auf die anorganischen Stoffe aufgesprüht werden, die so behandelten Fasern, Stränge bzw. Bündel in die endgültige Form gebracht und zu den Formkörpern verformt oder verpresst werden.

2. Verfahren nach Anspruch 1, **dadurch gekennzeichnet, daß** die Bündel bzw. Stränge der Fasern in Form eines Vlieses in Wirrlage vorliegen.

3. Verfahren nach Anspruch 1 und 2, **dadurch gekennzeichnet, daß** die anorganischen Fasern einen mittleren Durchmesser von ca. 4 bis 10 µm eine mittlere Länge im Bereich von 10 bis 1000 mm aufweisen.

4. Verfahren nach Anspruch 1, **dadurch gekennzeichnet, daß** das Molverhältnis Wasser : hydrolysierbaren Gruppen X (ROR-Wert) bei der Vorkondensation im Bereich von 0,2 bis 0,8 liegt.

5. Verfahren nach Anspruch 1, **dadurch gekennzeichnet, daß** die Siliciumverbindung Tetraethoxysilan oder Methyltriethoxysilan ist.

6. Verfahren nach Anspruch 1, **dadurch gekennzeichnet, daß** in mindestens 60 % der eingesetzten Siliciumverbindung n = 1 ist.

7. Verfahren nach Anspruch 1, **dadurch gekennzeichnet, daß** der Rest X ein Alkoxyrest mit 1 bis 4 Kohlenstoffatomen ist.

8. Verfahren nach Anspruch 1, **dadurch gekennzeichnet, daß** R eine Alkylgruppe mit 1 bis 4, insbesondere 1 bis 3 Kohlenstoffatomen oder ein Phenylrest ist.

9. Verfahren nach Anspruch 1, **dadurch gekennzeichnet, daß** die Vorkondensation mit 1 bis 2 Mol Wasser pro Mol Siliciumverbindung durchgeführt wird.

10. Verfahren nach den Ansprüchen 1 bis 9, **dadurch gekennzeichnet, daß** die Siliciumverbindung, der basische oder saure Katalysator und das Wasser in folgenden Mengenanteilen mit den anorganischen Fasern in Kontakt gebracht werden (bezogen auf Masse Fasern/Glas):
| | |
|---|---|
| Siliciumverbindung | 2 bis 40 % |
| Katalysator | 0,1 bis 2 % |
| Wasser | 10 bis 140 % |
und die Mischung zu dem Verbundwerkstoff verformt wird.

11. Verfahren nach Anspruch 10, **dadurch gekennzeichnet, daß** der Katalysator und das Wasser mit dem Vorkondensat vermischt werden, durch Stehenlassen über einen Zeitraum von 0,1 bis 24 h gealtert und dann in Mengen von 1 bis 30 %, bezogen auf die anorganische Faser, auf diese aufgesprüht.

## Claims

1. Method for manufacturing a composite material made from inorganic substances and silane-based bonding agents,
wherein one or more silicon compounds of the general formula:
Rₙ-Si-X₄-n
in which R denotes identical or different residues, which are hydrolytically inseparable;
in which X denotes one or more hydroxyl residues or one or more hydrolytically separable residues, which may be identical or different;
and in which n denotes a number between 0 and 3, preferably 1 to 2,
are used as the bonding agent, which silicon compounds have been pre-condensed with hypostoichiometric quantities of water per mole of silicon compound in the presence of basic or acidic catalysts,
and wherein bundles and/or strands of glass and/or mineral fibres are used as the inorganic substances,
**characterised in that** the pre-condensed silicon compounds are sprayed onto the inorganic substances in quantities from 1 to 20% by weight, in hyperstoichiometric quantities,
that the fibres, strands and/or bundles are brought into the final form and moulded or pressed to make formed elements.

2. Method according to claim 1, **characterised in that** the bundles and/or strands of fibres are present in random orientation in the form of a fleece.

3. Method according to claim 1 and 2, **characterised in that** the inorganic fibres have a mean diameter from approximately 4 to 10µm and a mean length within the range from 10 to 1000 mm.

4. Method according to claim 1, **characterised in that** the molar ratio of water to hydrolysable groups X (ROR-value) during the pre-condensation is within the range from 0.2 to 0.8.

5. Method according to claim 1, **characterised in that** the silicon compound is tetraethoxysilane or methyltriethoxysilane.

6. Method according to claim 1, **characterised in that** n = 1 in at least 60% of the silicon compound used.

7. Method according to claim 1, **characterised in that** the residue X is an alkoxy residue with 1 to 4 carbon atoms.

8. Method according to claim 1, **characterised in that** R is an alkyl group with 1 to 4, in particular, 1 to 3 carbon atoms or a phenyl residue.

9. Method according to claim 1, **characterised in that** the pre-condensation is implemented with 1 to 2 mole of water per mole of silicon compound.

10. Method according to claims 1 to 9, **characterised in that** the silicon compound, the basic or acidic catalyst and the water are brought into contact with the inorganic fibres in the following quantitative proportions (relative to the mass of fibres/glass):
| | |
|---|---|
| Silicon compound | 2 to 40% |
| Catalyst | 0.1 to 2% |
| Water | 10 to 140% |
and that the mixture is formed to make the composite material.

11. Method according to claim 10, **characterised in that** the catalyst and the water are mixed with the pre-condensate, aged by leaving to stand for a period from 0.1 to 24 hours and then sprayed onto the inorganic fibre in quantities from 1 to 30% relative to the inorganic fibre.

## Revendications

1. Procédé de fabrication d'une matière composite à partir de substances inorganiques et de liants à base de silane, dans lequel on utilise comme liant un ou plusieurs composés du silicium de la formule générale
Rₙ - Si - X₄ - n ,
où R sont des restes identiques ou différents qui ne subissent pas la dissociation hydrolytique et où X représente un ou plusieurs restes hydroxyle ou un ou plusieurs restes subissant la dissociation hydrolytique qui peuvent être identiques ou différents et n représente un nombre compris entre 0 et 3, de préférence valant de 1 à 2, lesquels composés du silicium ont été précondensés avec des quantités sous-stoéchiométriques d'eau par mole de composé du silicium en présence de catalyseurs basiques ou acides,
et dans lequel on utilise, comme substances inorganiques, des faisceaux ou écheveaux de fibres de verre et/ou de fibres minérales,
**caractérisé en ce que** les composés du silicium précondensés sont pulvérisés en des quantités de 1 à 20 % en poids avec des quantités sur-stoéchiométriques sur les substances inorganiques, les fibres, écheveaux ou faisceaux ainsi traités sont mis à leur forme définitive et sont mis en forme ou comprimés pour former les corps de forme.

2. Procédé selon la revendication 1, **caractérisé en ce que** les faisceaux ou écheveaux des fibres se présentent sous la forme d'un non-tissé à l'état emmêlé.

3. Dispositif selon la revendication 1 et 2, **caractérisé en ce que** les fibres inorganiques ont un diamètre moyen d'environ 4 à 10 µm et une longueur moyenne comprise dans l'intervalle de 10 à 1000 mm.

4. Procédé selon la revendication 1, **caractérisé en ce que** le rapport molaire eau : groupes X hydrolysables (valeur ROR) lors de la précondensation est compris dans l'intervalle allant de 0,2 à 0,8.

5. Procédé selon la revendication 1, **caractérisé en ce que** le composé du silicium est le tétraéthoxysilane ou le méthyltriéthoxysilane.

6. Procédé selon la revendication 1, **caractérisé en ce que**, dans au moins 60 % du composé du silicium utilisé, n=1.

7. Procédé selon la revendication 1, **caractérisé en ce que** le reste X est un reste alcoxy possédant 1 à 4 atomes de carbone.

8. Procédé selon la revendication 1, **caractérisé en ce que** R est un groupe alkyle possédant de 1 à 4, en particulier de 1 à 3 atomes de carbone, ou un reste phényle.

9. Procédé selon la revendication 1, **caractérisé en ce que** la précondensation est exécutée avec 1 à 2 moles d'eau par mole de composé du silicium.

10. Procédé selon les revendications 1 à 9,
**caractérisé en ce que** le composé du silicium, le catalyseur basique ou acide et l'eau sont mis en contact dans les proportions quantitatives suivantes avec les fibres inorganiques (rapporté à la masse fibres/verre) :
| | |
|---|---|
| composé du silicium | 2 à 40% |
| catalyseur | 0,1 à 2 % |
| eau | 10 à 140 % |
et le mélange est mis à la forme de la matière composite.

11. Procédé selon la revendication 10, **caractérisé en ce que** le catalyseur et l'eau sont mélangés avec le précondensat, vieillis par abandon au repos pendant une période de 0,1 à 24 heures, puis pulvérisés sur la fibre inorganique en des quantités de 1 à 30 % de la masse de la fibre inorganique.
